# EUROPÄISCHE PATENTSCHRIFT

(11) **EP 0 743 721 B1**
(45) Veröffentlichungstag und Bekanntmachung des Hinweises auf die Patenterteilung: **02.09.1998**
(21) Anmeldenummer: 96106595.0
(22) Anmeldetag: 26.04.1996
(51) Int. Cl.: H01S 3/06, H04B 10/17

(54) **Optischer Verstärker**
Optical amplifier
Amplificateur optique

(30) Priorität: 17.05.1995 DE 19518021
(43) Veröffentlichungstag der Anmeldung: 20.11.1996
(73) Patentinhaber: ALCATEL ALSTHOM COMPAGNIE GENERALE D'ELECTRICITE, 75008 Paris (FR)
(72) Erfinder: Regener, Rolf, Dr., 71739 Oberriexingen (DE); Schmitt, Gottfried, 90441 Nürnberg (DE)
(74) Vertreter: Schätzle, Albin, Dipl.-Phys.

(56) Entgegenhaltungen:
- EP-A- 0 527 604
- EP-A- 0 595 396
- EP-A- 0 640 853
- DE-A- 4 027 024
- PATENT ABSTRACTS OF JAPAN vol. 015, no. 234 (P-1215), 14.Juni 1991 & JP-A-03 071115 (NIPPON TELEGR & TELEPH CORP), 26.März 1991,
- IEEE PHOTONICS TECHNOLOGY LETTERS, Bd. 4, Nr. 8, 1.August 1992, Seiten 911-913, XP000293633 BARNARD C W ET AL: "BIDIRECTIONAL FIBER AMPLIFIERS"

## Beschreibung

Die Erfindung betrifft einen optischen Verstärker der im Oberbegriff des Anspruchs 1 näher bezeichneten Ausführung. Derartige Verstärker werden insbesondere in Systemen der optischen Nachrichtentechnik verwendet.

Ein optischer Verstärker gemäß dem Oberbegriff des Anspruchs 1 ist aus der Druckschrift "IEEE PHOTONICS TECHNOLOGY LETTERS, Vol. 4, No. 8, August 1992, Seiten 911 bis 913" bekannt. Er besteht im wesentlichen aus einer Pumplichtquelle, mehreren faseroptischen Kopplern, zwei erbiumdotierten aktiven Faserspulen und zwei optischen Isolatoren. Die Verbindungen zwischen den Enden der faseroptischen Bauelemente, sowie zwischen ankommender und abgehender Übertragungsleitung sind konventionelle Faserspleiße.

Aus der EP 0 171 615 B1 ist ein optisch integrierter Hybridschaltkreis bekannt, bei dem auf einem Siliziumsubstrat optische Wellenleiter aus Glas mit hohem Quarzanteil, beispielsweise entweder direkt oder mittels Kugellinsen an einen Laser, eine Diode und Glasfasern gekoppelt sind.

Außerdem wird in der Druckschrift "Light, Vol. 2, No. 2, Oktober 1994" (Optoelectronic Research Center, University of Southampton) eine integrierte optische Schaltung vorgeschlagen, bei der auf einem Teil der Fläche eines Glassubstrates als Pumpkoppler und kaskadierter Y - Verzweiger ausgebildete Wellenleiter und auf dem übrigen Teil der Fläche die Strecke eines erbiumdotierten Wellenleiters in spiraliger Anordnung vorgesehen sind.

Ferner sind in der DE 40 27 024 Ausführungsbeispiele von Faserkreiseln beschrieben, bei denen sowohl passive als auch aktive, optische und elektronische Funktionseinheiten in Siliziumssubstrate integriert sind und zwar sowohl in Form von Hybridschaltungen als auch in monolithischen Ausführungen.

Der Erfindung liegt die Aufgabe zugrunde, einen kostengünstig herstellbaren optischen Verstärker für die Verwendung in Breitbandsystemen zu schaffen. Diese Aufgabe wird erfindungsgemäß durch einen optischen Verstärker mit den im Anspruch 1 angegebenen Merkmalen gelöst. Die Unteransprüche enthalten vorteilhafte Ausgestaltungen des optischen Verstärkers. Mit der Erfindung erzielbare Vorteile sind der Beschreibung zu entnehmen.

Die Erfindung wird anhand einer Zeichnung, in der ein Ausführungsbeispiel eines optischen Verstärkers schematisch dargestellt ist, wie folgt näher beschrieben:

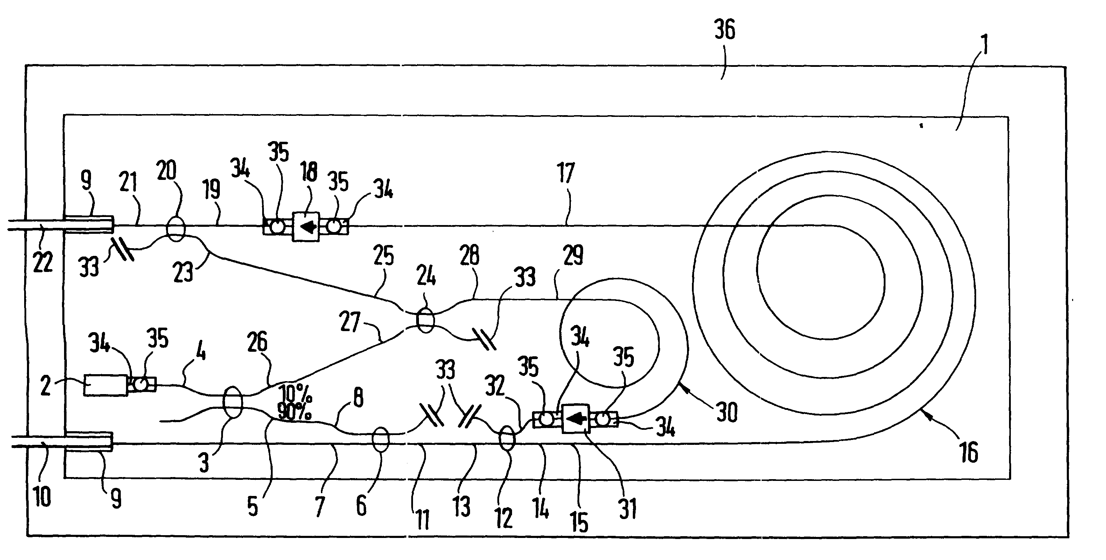

In der Zeichnung ist ein Trägerplättchen mit 1 bezeichnet. Es besteht vorzugsweise aus Silizium und hat in verschiedenen Konfigurationen integrierte optische Wellenleiter. Außerdem ist auf dem Trägerplättchen 1 eine hybrid integrierte Pumplichtquelle 2 so vor einem Eingangszweig 4 eines ersten Kopplers 3 angeordnet, daß Pumplicht in den Eingangszweig 4 einkoppelt. Vom ersten Koppler 3 ist ein erster Ausgangszweig 5 mit einem zweiten Eingangszweig 8 eines zweiten Kopplers 6 verbunden, dessen erster Eingangszweig 7 an einer V-Nut 9 endet. Der Eingangszweig 7 bildet einen ersten Verstärkeranschluß. Die im Bereich einer Schmalseite des rechteckigen Trägerplättchens 1 angeordnete V-Nut 9, dient zur Aufnahme und Ankopplung einer ersten Glasfaser 10.

Ein Ausgangszweig 11 des zweiten Kopplers 6 ist mit einem ersten Zweig 13 eines dritten Kopplers 12 verbunden, dessen entgegengesetztes Zweigende 14 eine Verbindung mit dem Eingang 15 eines ersten Wellenleiters 16 hat, der mit einem Seltene Erde Element, wie z.B. mit Erbium dotiert ist und im folgenden kurz erster aktiver Wellenleiter 16 genannt wird. Dieser aktive Wellenleiter 16 weist eine spiralförmige Konfiguration mit einem von innen heraus mehrere Windungen kreuzenden Ausgang 17 auf, der in Durchlaßrichtung vor einem hybrid integrierten ersten optischen Isolator 18 endet. An der Ausgangsseite dieses Isolators 18 beginnt ein erster Zweig 19 eines vierten Kopplers 20, dessen entgegengesetztes Zweigende 21 an einer weiteren V-Nut 9 endet, die mit Abstand parallel zu der zuvor erwähnten angeordnet ist und der Ankopplung einer zweiten Glasfaser 22 an das Zweigende 21 des vierten Kopplers 20 dient. Dieses Zweigende 21 bildet einen zweiten Verstärkeranschluß.

Einem durch die erste Glasfaser 10 am ersten Eingangszweig 7 des zweiten Kopplers 6 ankommenden Signallicht wird von der Pumplichtquelle 2 ausgehend über den Eingangszweig 4 und den ersten Ausgangszweig 5 des ersten Kopplers 3 und über den zweiten Eingangszweig 8 des zweiten Kopplers 6 Pumplicht zugeführt, das sich zusammen mit dem Signallicht durch den Ausgangszweig 11 des zweiten Kopplers 6 und den ersten Zweig 13 des dritten Kopplers 12, sowie über dessen entgegengesetztes Zweigende 14 und durch den Eingang 15, in den aktiven Wellenleiter 16 ausbreitet. Das darin verstärkte Signallicht wird über den Ausgang 17 des aktiven Wellenleiters 16 durch den ersten optischen Isolator 18 geführt und über den ersten Zweig 19 des vierten Kopplers 20 sowie dessen entgegengesetztes Zweigende 21, in die zweite Glasfaser 22 eingekoppelt.

Bei einem optischen Breitbandsystem, wie dem Projekt "Video on Demand mit Multimedia-Distribution", bei dem jedem Teilnehmer eine sehr hohe Datenmenge angeboten wird, ist ein Rückkanal erforderlich, auf dem der Teilnehmer seine getroffene Auswahl signalisieren kann. Aus diesem Grund ist der optische Verstärker bidirektional arbeitend ausgelegt. Das heißt, daß vom Teilnehmer über die zweite Glasfaser 22 am zweiten Verstärkeranschluß ankommendes Signallicht vom ersten optischen Isolator 18 abgeblockt wird, in den zweiten Zweig 23 des vierten Kopplers 20 überkoppelt, der mit dem ersten Eingangszweig 25 eines fünften Kopplers 24 verbunden ist.

Dem zuletzt genannten Koppler 24 wird von der Pumplichtquelle 2 ausgehend über einen zweiten Ausgangszweig 26 des ersten Kopplers 3 und einen mit dem Ausgangszweig 26 verbundenen zweiten Eingangszweig 27 des fünften Kopplers 24 Pumplicht zugeführt, das sich zusammen mit dem Signallicht vom Teilnehmer über einen Ausgangszweig 28 des fünften Kopplers 24 und durch einen Eingang 29, in einen zweiten Wellenleiter 30 ausbreitet, der ebenfalls mit einem Seltene Erde Element, wie z.B. mit Erbium dotiert ist und nachfolgend kurz zweiter aktiver Wellenleiter 30 genannt wird. Das darin verstärkte Signallicht wird durch einen hybrid integrierten zweiten optischen Isolator 31 geführt, durchläuft einen zweiten Zweig 32 des dritten Kopplers 12, koppelt in dessen ersten Zweig 13 über und wird durch den Ausgangszweig 11 des zweiten Kopplers 6 und dessen ersten Eingangszweig 7 in die erste Glasfaser 10 eingekoppelt.

Weil das über die zweite Glasfaser 22 vom Teilnehmer ankommende Signallicht aus einer weitaus geringeren Datenmenge besteht als das durch die erste Glasfaser 10 eingekoppelte Signallicht, hat der das Pumplicht verzweigende erste Koppler 3 eine asymmetrische Leistungsaufteilung, bei der beispielsweise 90 % des Pumplichtes dem von der ersten Glasfaser 10 eingekoppelten Signallicht und 10 % des Pumplichtes dem durch die zweite Glasfaser 22 ankommenden Signallicht zugeführt wird. Dementsprechend hat der zweite erbiumdotierte Wellenleiter 30 nur eine einfache schleifenförmige Konfiguration mit relativ kurzer Leitungslänge, bei welcher der Leitungszug des Eingangs 29 nur einmal gekreuzt wird und sich dann im halbkreisförmigen Bogen bis vor den zweiten optischen Isolator 31 erstreckt. Bedarfsweise kann der erste Koppler auch eine beliebige andere asymmetrische Leistungsaufteilung haben. Die Verstärkungsfaktoren vom ersten und zweiten aktiven Wellenleiter 16, 30 entsprechen in etwa der asymmetrischen Leistungsaufteilung des ersten Kopplers 3, in den Pumplicht eingespeist wird.

Die bei dem optischen Verstärker auf einem Trägerplättchen 1 integrierten Koppler 3,6,12,20,24 haben X-Konfiguration, von denen mit Ausnahme des ersten Kopplers 3 ein jeweils ungenutzter Zweig zur Vermeidung von Reflexionen in einem optischen Sumpf 33 endet. Außerdem dient jeweils eine in einer V-Nut 34 fixierte Kugellinse 35 der optimalen Ankopplung von Pumplichtquelle 2 und optischen Isolatoren 18, 31 einerseits und den verschiedenen Wellenleitern andererseits. Die hybrid integrierten optischen Isolatoren 18, 31 und die Pumplichtquelle 2 sind vorzugsweise in eng tolerierten Montagegruben fixiert, die, wie auch die V-Nuten 34, mittels bekannter Ätztechniken ausgehoben werden.

Auf dem Trägerplättchen 1 haben die verschiedenen optischen Komponenten eine nur relativ kleine Fläche beanspruchende Anordnung. Die optimale Verteilung wird dadurch erreicht, daß die Pumplichtquelle 2, der von der Pumplichtquelle 2 gespeiste erste Koppler 3 und der mit dem ersten Koppler 3 verbundene fünfte Koppler 24 sowie der mit diesem verbundene zweite aktive Wellenleiter 30 und der zweite optische Isolator 31, der mit dem Ausgang des Wellenleiters 30 verbunden ist, auf der Fläche zwischen dem vom ersten Verstärkeranschluß zur Spirale des ersten aktiven Wellenleiters 16 führenden Leitungszug und dem von der Spirale zum zweiten Verstärkeranschluß führenden Leitungszug angeordnet sind.

Das Aufbringen der optischen Wellenleiter auf das Trägerplättchen 1 aus Si geschieht durch Anwendung des FHD - Verfahrens (Flame Hydrolysis Deposition), bei dem dotierte SiO₂ Partikel in Spuren auf einem rotierenden Si - Wafer abgeschieden werden. Da der mit Erbium dotierte Bereich für die aktiven Wellenleiter 16, 30 relativ groß ist, wird dieser selektiv anders hergestellt als zuvor erwähnt, indem beim Aufbringen der erbiumdotierten SiO₂ Partikel die Gaszusammensetzung verändert, oder mit zwei Brennern gearbeitet wird. Im Übergangsbereich zwischen aktiven Wellenleitern 16, 30 und den übrigen Wellenleitern ergibt sich durch anschließendes Sintern ein Diffusionsbereich mit optisch vorteilhaft niedriger Dämpfung.

Das fertige Trägerplättchen 1 mit den verschiedenen optischen Komponenten kann bedarfsweise auch mit einer integrierten elektrischen Treiberschaltung für den als Pumplichtquelle 2 verwendeten Laser versehen sein (nicht dargestellt). Zum mechanischen Schutz ist das Trägerplättchen 1 zweckmäßigerweise in einem Gehäuse 36 untergebracht.

Die vorliegende Ausführung des optischen Verstärkers zeichnet sich durch äußerst minimale Abmessungen aus und hat wegen des hohen Integrationsgrades gegenüber faseroptischen Lösungen eine bedeutend größere Funktionssicherheit. Da der optisch integrierte Verstärker sich außerdem rationell im Nutzen fertigen läßt, kann er mit relativ niedrigen Gestehungskosten besonders wirtschaftlich und somit preiswert hergestellt werden.

## Patentansprüche

1. Optischer Verstärker für Breitbandsysteme, der bidirektional betreibbar ist und zwei räumlich voneinander getrennte, mit einem Seltene-Erde-Element dotierte, aktive Wellenleiter (16, 30) und eine Pumplichtquelle (2) hat, die einen ersten Koppler (3) speist, durch den ein Pumplichtanteil in einem zweiten Koppler (6) zusammen mit dem von einem ersten Verstärkeranschluß (10) ankommenden Signallicht über den ersten aktiven Wellenleiter (16) zu einem zweiten Verstärkeranschluß (22) geführt, und der andere Pumplichtanteil in einem weiteren Koppler (24) zusammen mit Signallicht, das am zweiten Verstärkeranschluß (22) ankommt und durch den zweiten aktiven Wellenleiter (30) zum ersten Verstärkeranschluß (10) geführt ist
**dadurch gekennzeichnet,** daß die optischen Wellenleiter (3, 16, 24, 30) auf einem Trägerplättchen (1) integriert sind, und daß die aktiven optischen Wellenleiter (16, 30) eine spiralförmige Konfiguration mit einem von innen heraus wenigstens eine Windung kreuzenden Ausgang (17) aufweisen.

2. Optischer Verstärker nach Anspruch 1, dadurch gekennzeichnet, daß der von der Pumplichtquelle (2) gespeiste erste Koppler (3) eine asymmetrische Leistungsaufteilung hat.

3. Optischer Verstärker nach Anspruch 1, dadurch gekennzeichnet, daß die Leistungsaufteilung des ersten Kopplers (3) 10% zu 90% beträgt.

4. Optischer Verstärker nach Anspruch 1, dadurch gekennzeichnet, daß die aktiven optischen Wellenleiter (16,30) unterschiedliche Verstärkungsfaktoren haben.

5. Optischer Vewrstärker nach Anspruch 1, dadurch gekennzeichnet, daß die Pumplichtquelle (2) aus einem hybrid integrierten Laser besteht.

6. Optischer Verstärker nach Anspruch 1, dadurch gekennzeichnet, daß das Trägerplättchen (1) hybrid integrierte optische Isolatoren (17, 31) aufweist.

7. Optischer Verstärker nach Anspruch 5 oder 6, dadurch gekennzeichnet, daß die Pumplichtquelle (2) und optischen Isolatoren (18, 31) jeweils mittels einer Kugellinse (35), die in einer V-Nut (34) fixiert ist, an die optischen Wellenleiter gekoppelt sind.

8. Optischer Verstärker nach Anspruch 1, dadurch gekennzeichnet, daß der erste Verstärkeranschluß (10) und der zweite Verstärkeranschluß (22) an derselben Seite des Trägerplättchens (1) angeordnet sind.

9. Optischer Vertärker nach Anspruch 8, dadurch gekennzeichnet, daß das Trägerplättchen (1) aus Silizium besteht.

10. Optischer Verstärker nach einem der vorhergehenden Ansprüche, durch gekennzeichnet, daß die Pumplichtquelle (2), der von der Pumplichtquelle (2) gespeiste erste Koppler (3) und der mit dem ersten Koppler (3) verbundene weitere Koppler (24) sowie der mit diesem verbundene zweite aktive Wellenleiter (30) und ein optischer Isolator (31), der mit dem Ausgang des Wellenleiters (3) verbunden ist, auf der Fläche zwischen dem vom ersten Verstärkeranschluß zur Spirale des ersten aktiven Wellenleiters (16) führenden Leitungszug und dem von der Spirale zum zweiten Verstärkeranschluß führenden Leitungszug angeordnet sind.

## Claims

1. A bidirectional optical amplifier for broadband systems, comprising two spatially separate, rare-earth-doped active waveguides (16, 30) and a pump-light source (2) which feeds a first coupler (3), from which a first portion of the pump light proceeds to a second coupler (6), together with signal light arriving from a first amplifier connection (10), through the first active waveguide (16) to a second amplifier connection (22), and a second portion of pump light proceeds to a further coupler (24), together with signal light arriving at the second amplifier connection (22), and proceeds from the second active waveguide (30) to the first amplifier connection (10), characterized in that the optical waveguides (3, 16, 24, 30) are integrated on a substrate (1), and that the active optical waveguides (16, 30) have a spiral configuration, each with an output (17) that crosses at least one winding from inside the spiral configuration.

2. An optical amplifier as claimed in claim 1, characterized in that the first coupler (3), which is fed by the pump-light source (2), has an asymmetric power distribution.

3. An optical amplifier as claimed in claim 1, characterized in that the first coupler (3) has a power distribution that is 10% to 90%.

4. An optical amplifier as claimed in claim 1, characterized in that the active waveguides (16, 30) have different amplification factors.

5. An optical amplifier as claimed in claim 1, characterized in that the pump-light source (2) is a hybrid integrated laser.

6. An optical amplifier as claimed in claim 1, characterized in that the sustrate (1) incorporates hybrid integrated optical isolators (17, 31).

7. An optical amplifier as claimed in claim 5 or 6, characterized in that the pump-light source (2) and the optical isolators (18, 31) are each coupled to the optical waveguides by means of a spherical lens (35), which is fixed in a V-groove (34).

8. An optical amplifier as claimed in claim 1, characterized in that the first amplifier connection (10) and the second amplifier connection (22) are located on the same side of the substrate (1).

9. An optical amplifier as claimed in claim 8, characterized in that the substrate (1) is made of silicon.

10. An optical amplifier as claimed in one of the preceding claims, characterized in that the pump-light source (2), the first coupler (3) fed by the pump-light source (2), and the further coupler (24) which is connected to the first coupler (3), as well as the second active waveguide (30) connected the further coupler (24), and an optical isolator (31) which is connected to the output of the waveguide (3), are arranged in an area of the substrate between a line path leading from the first amplifier connection to the spiral configuration of the first active waveguide (16), and a line path leading from the spiral configuration to the second amplifier connection.

## Revendications

1. Amplificateur optique pour des systèmes à large bande, qui peut être exploité dans deux directions et qui comprend deux guides d'ondes actifs (16, 30), séparés l'un de l'autre et dotés d'un élément en terre rare, et une source de lumière de pompage (2), qui alimente un premier coupleur (3), par lequel est guidée une partie de la lumière de pompage dans un deuxième coupleur (6), conjointement avec une lumière de signal émise par une première connexion de l'amplificateur (10), par l'intermédiaire du premier guide d'ondes actif (16) vers une deuxième connexion de l'amplificateur (22), et l'autre partie de la lumière de pompage est guidée dans un autre coupleur (24) conjointement avec une lumière de signal, qui est captée à la deuxième connexion de l'amplificateur (22), et dirigée par l'intermédiaire du deuxième guide d'ondes actif (30) vers la première connexion de l'amplificateur (10),
caractérisé en ce que les guides d'ondes optiques (3, 16, 24, 30) sont intégrés sur une plaquette de support (1), et en ce que les guides d'ondes optiques actifs (16, 30) présentent une configuration hélicoïdale avec une sortie (17) qui, en provenant de l'intérieur, croise au moins une spire.

2. Amplificateur optique selon la revendication 1, caractérisé en ce que le premier coupleur (3), alimenté par la source de lumière de pompage (2) présente un partage de puissance asymétrique.

3. Amplificateur optique selon la revendication 1, caractérisé en ce que le partage de puissance du premier coupleur (3) est compris entre 10 % et 90 %.

4. Amplificateur optique selon la revendication 1, caractérisé en ce que les guides d'ondes optiques actifs (16, 30) n'ont pas les mêmes facteurs d'amplification.

5. Amplificateur optique selon la revendication 1, caractérisé en ce que la source de lumière de pompage (2) est constituée d'un laser intégré de forme hybride.

6. Amplificateur optique selon la revendication 1, caractérisé en ce que la plaquette de support (1) comporte des isolateurs optiques (17, 31) intégrés, de forme hybride.

7. Amplificateur optique selon la revendication 5 ou 6, caractérisé en ce que la source de lumière de pompage (2) et les isolateurs optiques (18, 31) sont couplés respectivement aux guides d'ondes optiques par une lentille sphérique (35), qui est fixée dans une rainure en V (34).

8. Amplificateur optique selon la revendication 1, caractérisé en ce que la première connexion de l'amplificateur (10) et la deuxième connexion de l'amplificateur (22) sont disposées sur le même côté de la plaquette de support (1).

9. Amplificateur optique selon la revendication 8, caractérisé en ce que la plaquette de support (1) est une plaquette en silicium.

10. Amplificateur optique selon l'une quelconque des revendications précédentes, caractérisé en ce que la source de lumière de pompage (2), le premier coupleur (3) alimenté par la source de lumière de pompage (2) et l'autre coupleur (24) relié au premier coupleur (3), de même que le deuxième guide d'ondes actif (30), relié à ce dernier, et un isolateur optique (31), qui est relié à la sortie du guide d'ondes (3) sont disposés sur la surface entre la ligne conduisant de la première connexion de l'amplificateur vers la spirale du premier guide d'ondes actif (16) et la ligne conduisant de la spirale à la deuxième connexion de l'amplificateur.
